# EUROPEAN PATENT SPECIFICATION

(11) **EP 3 962 997 B1**
(45) Date of publication and mention of the grant of the patent: **03.01.2024**
(21) Application number: 20727757.5
(22) Date of filing: 30.04.2020
(51) Int. Cl.: C08K 3/04, C08L 9/02, C08L 23/00, C08K 3/06, C08K 5/11, C08K 5/40, C08K 5/09, C08K 3/22

(54) **NITRILE RUBBER MATERIAL FOR USE WITH CONSUMER ELECTRONIC DEVICES**
NITRIL KAUTSCHUK MATERIAL ZUR VERWENDUNG MIT UNTERHALTUNGSELEKTRONIK GERÄTEN
MATÉRIAU A BASE DE CAOUTCHOUC NITRILE POUR DISPOSITIFS ÉLECTRONIQUES DE CONSOMMATION

(30) Priority: 03.05.2019 US 201962842619 P; 02.03.2020 US 202016806849
(43) Date of publication of application: 09.03.2022
(73) Proprietor: Amazon Technologies, Inc., Seattle, WA 98108-1226 (US)
(72) Inventor: HAYES, Robert Andrew, Seattle, Washington 98109-5210 (US); ARUNACHALAM, Dinesh K., Seattle, Washington 98109-5210 (US); MUKHEDKAR, Paresh, Seattle, Washington 98109-5210 (US); GUIGNION, Daniel, Seatle, Washington 98109- 5210 (US)
(74) Representative: Loveless, Ian Mark
(86) International application number: PCT/US2020/030597
(87) International publication number: WO 2020/226984

(56) References cited:
- EP-A1- 1 197 524
- US-A1- 2016 247 597

## Description

### CROSS-REFERENCE TO RELATED APPLICATION

This application is an international application of, and claims the benefit of, US Application No. 16/806,849, filed March 2, 2020, which claims the benefit of US Provisional Application No. 62/842,619, filed May 3, 2019.

### BACKGROUND

Some objects, including electronic devices, may include rubber components or feet that support the device on a surface, such as a tabletop, a desk, a stand, or other surface. In some instances, the objects may be placed on wood surfaces. Some rubber materials may leave marks on surfaces. For example, a rubber material of a rubber foot of an object or device may leave a skid mark on a wood surface as a result of rubbing the rubber material on the surface. In another example, a rubber material may absorb oils from a wood surface and may therefore leave behind a light colored stain or discoloration on the wood surface. Such markings may not be desired.

### BRIEF DESCRIPTION OF THE DRAWINGS

FIG. 1 is an example use case and schematic drawing of a device having a typical rubber foot and a device having a rubber foot in accordance with one or more embodiments of the disclosure.
FIG. 2 is a schematic illustration of a table depicting a rubber formulation of a nitrile rubber material in accordance with one or more embodiments of the disclosure.
FIG. 3 is an example process flow for a method of producing a nitrile rubber material for use with consumer electronic devices in accordance with one or more embodiments of the disclosure.
FIG. 4 is a schematic drawing of example use cases of nitrile rubber components having different surface roughnesses in accordance with one or more embodiments of the disclosure.
FIG. 5 schematically illustrates an example architecture of an electronic device in accordance with one or more embodiments of the disclosure.

The drawings are provided for purposes of illustration only and merely depict example embodiments of the disclosure, and the detailed description in the following section is set forth with reference to the accompanying drawings. The drawings are provided to facilitate understanding of the disclosure and shall not be deemed to limit the breadth, scope, or applicability of the disclosure. The use of the same reference numerals indicates similar, but not necessarily the same or identical components. Different reference numerals may be used to identify similar components. Various embodiments may utilize elements or components other than those illustrated in the drawings, and some elements and/or components may not be present in various embodiments. The use of singular terminology to describe a component or element may, depending on the context, encompass a plural number of such components or elements and vice versa.

### DETAILED DESCRIPTION

### OVERVIEW

Rubber parts may leave marks on objects such as floor or furniture. Mechanisms and alternative materials and processes to mitigate the risk of wood furniture marking, especially for consumer devices, may therefore be desired.

For example, devices may have rubber components, such as rubber feet, that support the device on various surfaces. Some surfaces, such as wood surfaces, may be susceptible to damage as a result of prolonged contact with certain types of rubber. For example, silicone rubber may cause damage to wood surfaces by absorbing oils and other components of wood surfaces. As a result, when the device is moved, the wood surface may have light colored discolorations or "dry spots" where the rubber was in contact with the wood surface. In another example, skid marks may be left behind when certain rubber feet of devices are dragged or rubbed on wood surfaces.

Such marking has been reported for devices that have rubber feet made of liquid silicone rubber. Marking may impact long term usability of these devices. Silicone rubbers can imbibe low energy liquids, such as furniture oils/waxes, within minutes leaving a light-colored drying mark where the wood has been depleted of oil in the contact area. Pressure is a primary accelerant as it leads to increased rubber/wood contact area facilitating the migration of oil/wax from the wood into the rubber. A local pressure of just 0.3 pounds per square inch (psi) is sufficient to give rise to marking for a typical liquid silicone rubber. Typical average foot pressures span the range from 0.07 psi to 10 psi depending on device weight and foot design. If the device weight is spread unevenly then marking may occur even for light weight devices with silicone rubber feet.

This disclosure relates to, among other things, systems, methods, techniques, and methodologies for nitrile rubber materials for use with consumer electronic devices. Embodiments of the disclosure include methods and systems that can be used to produce, or that provide, a rubber material having a formulation that avoids marking issues common with other types of rubber, such as liquid silicone rubber. Embodiments may therefore improve performance of rubber components by avoiding marking, increasing durability of rubber components, as well as result in an improved user experience due to a reduced likelihood of damage caused by the rubber components, such as rubber feet.

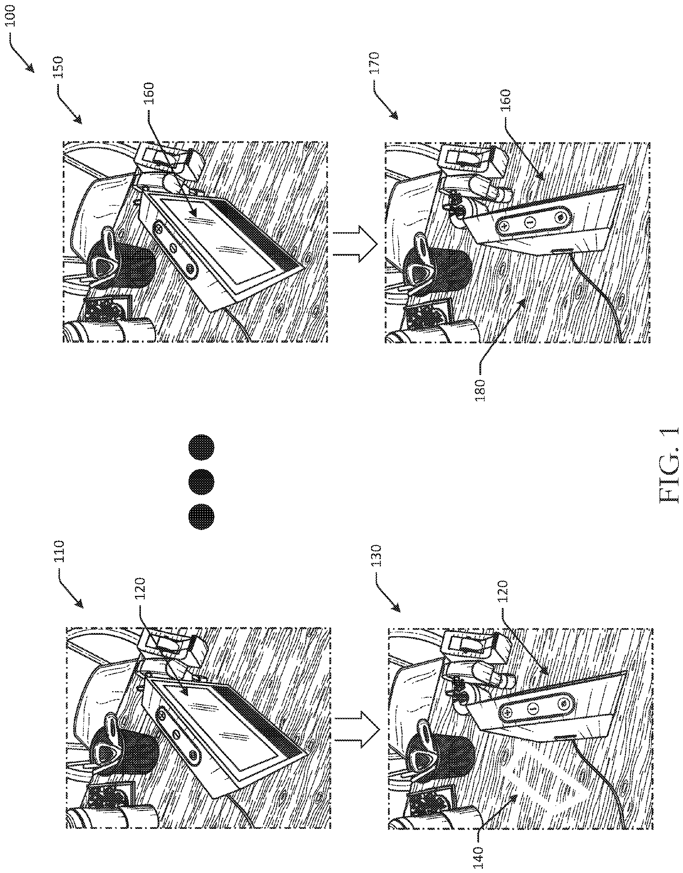

Referring to FIG. 1, an example use case 100 and schematic drawing of a device having a typical rubber foot and a device having a rubber foot in accordance with one or more embodiments of the disclosure. A first device 120 may have a typical rubber foot and may be in a first position at a first instance 110. The first device 120 may be in the first position for a number of minutes. At a second instance 130, such as fifteen minutes after the first instance 110, the first device 120 may be moved to a second position. However, the rubber foot of the first device 120 may have been formed of a rubber material such as liquid silicone rubber. As a result, the rubber foot may have absorbed some of the oils or wax of the wood surface on which the first device 120 was placed. Accordingly, marking 140 may be left on the wood surface. Marking 140 may be an outline of the rubber foot and may or may not be consistent along the perimeter or the entire contact area between the rubber foot and the surface. Areas with higher pressure may also leave behind more marking than areas with less pressure on the wood surface.

In contrast, a second device 160 may have a rubber foot with a formulation in accordance with one or more embodiments of the disclosure. The rubber foot may be coupled to a housing of the second device 160. The second device 160 may have one or more processors disposed within the housing and may have one or more network interfaces coupled to the processor. The second device 160 may be in a first position at a first instance 150. The second device 160 may be in the first position for a number of minutes. At a second instance 170, such as fifteen minutes after the first instance 150, the second device 160 may be moved to a second position. However, the rubber foot of the second device 160 may have been formed of a rubber material as described herein. As a result, the rubber foot may not have caused any damage to the wood surface. Accordingly, no marking 180 may be left on the wood surface, regardless of pressure.

Embodiments of the disclosure may include an oil resistant rubber material, nitrile butadiene rubber, that can be used with consumer electronic devices. In some instances, a savings of about 30% may be achieved using the formulations described herein relative to liquid silicone rubber. Embodiments may be compression molded, rather than liquid injection molded, which also can reduce the cost of tooling by about 60% and molding equipment by about 40%.

Embodiments may therefore provide a drop-in or swappable mechanical part made with alternative materials and processing to an existing device. Some embodiments provide rubber materials that can be used as a cosmetic surface in electronic devices.

Example embodiments of the disclosure provide a number of technical features or technical effects. For example, in accordance with example embodiments of the disclosure, certain embodiments of the disclosure may include rubber components having a formulation that mitigates the risk of marking surfaces. The above examples of technical features and/or technical effects of example embodiments of the disclosure are merely illustrative and not exhaustive.

One or more illustrative embodiments of the disclosure have been described above. The above-described embodiments are merely illustrative of the scope of this disclosure and are not intended to be limiting in any way. Accordingly, variations, modifications, and equivalents of the embodiments disclosed herein are also within the scope of this disclosure. The above-described embodiments and additional and/or alternative embodiments of the disclosure will be described in detail hereinafter through reference to the accompanying drawings.

### ILLUSTRATIVE EMBODIMENTS AND USE CASES

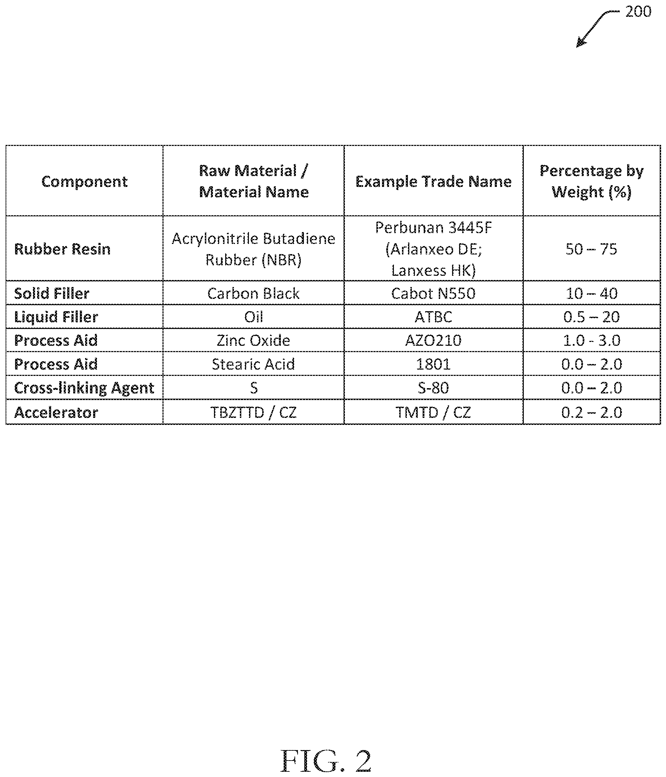

FIG. 2 is a schematic illustration of a table 200 depicting a rubber formulation of a nitrile rubber material in accordance with one or more embodiments of the disclosure. Different embodiments may include different, additional, or fewer components than those illustrated in the example of FIG. 2.

The resin, solid filler(s), and liquid filler(s) together may determine the color, hardness, and general flow properties of the rubber material. The color may be impacted by the solid filler(s). The vulcanization or cross-linking agent and accelerant are added after the resin, solid filler(s), liquid filler(s), and process aid(s) are combined. For compression molding, relatively higher temperatures (e.g., 180 degrees Celsius, etc.) and pressures may be used. Vulcanization and accelerants can be added at the molding site prior to molding. In this way the risk of exceeding shelf life can be mitigated.

The table 200 provides examples ranges for each of the ingredients or components of the rubber formulation described herein. In particular, the ranges for the ingredients of the rubber formulation in the table 200 correspond to a dark-colored (e.g., charcoal, black, etc.) rubber material. Other embodiments may have different colors that can be achieved by replacing the solid filler material. For example, for a gray-colored or light-colored rubber material, a solid filler material of a carbon white material may be used instead of a carbon black material, and for a different colored rubber material (e.g., red, yellow, green, blue, etc.) respective color pigments be used instead of the carbon black material depicted in FIG. 2. The weight percentage of solid filler material may be consistent with that presented in the table 200 for different colors. The specific amount of each ingredient / component can be adjusted based on which of the properties are desired to be modified, such as color, hardness, surface energy (e.g., higher surface energy may repel dust, etc.), surface friction, and so forth.

The rubber formulation may include a number of components as set forth in the table 200, including a rubber resin. The rubber resin is an acrylonitrile butadiene rubber. An example acrylonitrile butadiene rubber material may be PERBUNAN^{®} 3445F supplied by Arlanxeo or Lanxess. The acrylonitrile butadiene rubber may be relatively clean, non-staining, stabilized, and fast-curing. The acrylonitrile butadiene rubber may have relatively high low temperature flexibility, heat resistance, and short molding cycle time. The acrylonitrile butadiene rubber is a percentage weight of 50% to 75% of the rubber component, for example 50%, 55%, 60%, 65%, and so forth.

The rubber formulation includes one or more solid fillers. Solid fillers may be used to impact a color of the rubber product. An example solid filler may be carbon black material, which may be a dark or black colored material. An example carbon black material may be CABOT^{®} N550. Solid fillers may impact hardness and durometer of the final rubber product. The solid filler is a percentage weight of 10% to 40% of the rubber component, for example 15%, 20%, 25%, 30%, and so forth. Modification of the weight percentage of the carbon black material or other solid filler may cause a color of the rubber component to change. Other solid fillers may be white carbon, such as silica, titanium oxide, etc.

The rubber formulation includes one or more liquid fillers. Liquid fillers may be used to impact a hardness and/or durometer of the rubber product. An example liquid filler may be oil. An example oil material may be acetyl tributyl citrate, such as that supplied by TRAQUISA^{®}. Acetyl tributyl citrate may be an organic origin mono constituent substance, and may be a plasticizer with high resistance to light and heat. Increased amounts of liquid fillers may result in rubber components with reduces hardness. The liquid filler is a percentage weight of 0.5% to 20% of the rubber component, for example 0.5%, 1%, 5%, 10%, 15%, 20%, and so forth. Modification of the weight percentage of the oil or other liquid filler may cause a hardness of the rubber component to change. A hardness range for the rubber component may be between about Shore 25A to about Shore 75A, such as between about Shore 40A to about Shore 60A, which can be varied by changing the amount of liquid filler in the recipe.

The rubber formulation includes one or more process aids. Process aids may be used to modify properties of the rubber product. Process aids may help deliver properties for cosmetics and homogeneity, and could be antioxidants. An optional first process aid may be zinc oxide, which may act as an acid scavenger. An example zinc oxide may be supplied by SPECIALCHEM^{®}. The zinc oxide may be a percentage weight of about 1% to about 3% of the rubber component, such as 1%, 2%, 3%, and so forth. An optional second process aid may be stearic acid, which may act as a lubricant. The stearic acid may be a percentage weight of about 0% to about 2% of the rubber component, such as 0%, 0.5%, 1%, 1.5%, and so forth.

The rubber formulation includes one or more cross-linking agents. Cross-linking agents may be used as a curing agent. An example liquid filler may be a combination of 80% sulfur and 20% elastomer. An example cross-linking agent material may be supplied by RHENOGRAN^{®} S-80. Due to the homogeneous dispersion in the rubber the occurrence of localized over-cured zones is avoided. The cross-linking agent may be a percentage weight of about 0% to about 2% of the rubber component, such as 0%, 0.5%, 1%, 1.5%, and so forth.

The rubber formulation may include one or more accelerators. Accelerators may be used for low-temperature curing of rubber. An example accelerator may be tetramethylthiuram disulfide. An example tetramethylthiuram disulfide material may be supplied by EASTMAN^{®} TMTD. The accelerator may be a percentage weight of about 0.2% to about 2% of the rubber component, such as 0.5%, 1%, 1.5%, 2%, and so forth.

In an example embodiment, the rubber formulation for a rubber product or component as described herein includes acrylonitrile butadiene rubber having a weight percentage of between 50% to 75%, such as between about 55% to about 60% of the rubber component, a solid filler having a weight percentage of between 10% to 40%, such as between about 20% to about 25% of the rubber component, a liquid filler having a weight percentage of between 0.5% to 20%, such as between about 10% to about 15% of the rubber component, a first process aid having a weight percentage of between 1.0% to 3.0%, such as between about 2% to about 3% of the rubber component, and a cross-linking agent having a weight percentage of up to 2%, such as between about 0% and about 1% of the rubber component.

In a particular example of an embodiment, the rubber formulation may be used to form a rubber foot for an electronic device. The rubber foot may therefore be formed of a material that includes acrylonitrile butadiene rubber having a weight percentage of between about 55% to about 60% of the foot. The material may include carbon black having a weight percentage of between about 20% to about 25% of the foot. The material may include oil having a weight percentage of between about 10% to about 15% of the foot, and zinc oxide having a weight percentage of between about 2% to about 3% of the foot. The material may include stearic acid having a weight percentage of between about 0% and about 1% of the foot, and a cross-linking agent having a weight percentage of between about 0% and about 1% of the foot. The material may include an accelerator having a weight percentage of about 1% and about 2% of the foot.

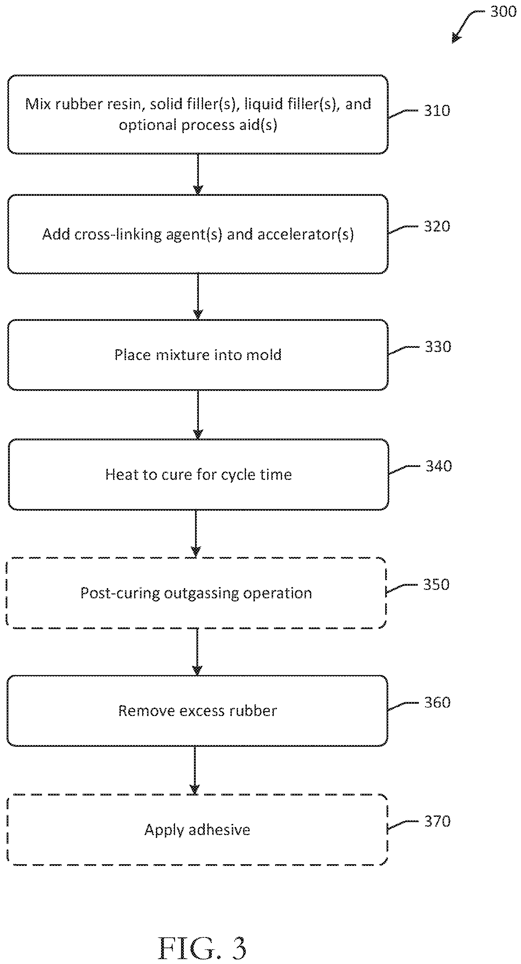

FIG. 3 is an example process flow 300 for a method of producing a nitrile rubber material for use with consumer electronic devices in accordance with one or more embodiments of the disclosure. One or more of the operations of FIG. 3 may be performed at manually or automatically using one or more pieces of equipment. One or more of the operations of the process flow 300 may be optional and may be performed in any order or at least partially concurrently in some embodiments.

At block 310 of the process flow 300, raw materials to form a nitrile rubber material may be mixed together. For example, a rubber resin, one or more solid fillers, one or more liquid fillers, and one or more optional process aids may be mixed together. The components may be mixed in an open or closed compounder or other piece of equipment. The components may be combined according to the percentage by weight described with respect to FIG. 2. For example, a percentage weight of rubber resin may be between about 50% and about 75%, a percentage weight of the solid filler(s) may be between about 10% to about 40%, a percentage weight of the liquid filler(s) may be between about 0.5% to about 20%, and a percentage weight of the optional process aids may be a combined total percentage weight of between about 0% to about 5%. In one example, an order of mixing may be to first obtain rubber resin, add the solid filler(s), add the liquid filler(s), and then add the optional process aid(s). The result of the mixture may be a stable formulation having a shelf life of about two years.

At block 320, one or more cross-linking agent(s) and one or more accelerator(s) may be added to the mixture. The components may be added according to the percentage by weight described with respect to FIG. 2. For example, a percentage weight of between about 0% to about 2% of a cross-linking agent may be added to the mixture, and a percentage weight of between about 0.2% and about 2% of an accelerator may be added to the mixture. The accelerator may be added after the cross-linking agent or before the cross-linking agent. The mixture may be mixed to incorporate the cross-linking agent(s) and the accelerator(s). The result may be a formulation having a shelf life of one week or less, and may initiate a setting process for the rubber material.

At block 330, the mixture may be placed into a mold. For example, the mixture may be poured or injected into a mold cavity. The mold cavity may have a shape of a desired component. For example, the mold may be in the shape of a rubber foot or other component. The mold cavity may have laser-etched or otherwise rough surfaces, and may optionally have polished or otherwise smooth surfaces. The laser-etched surfaces may be portions of the mold cavity for which a rubber component formed in the mold will have a dull or non-glossy finish. The polished or otherwise smooth surfaces may be portions of the mold cavity for which a rubber component formed in the mold will have a glossy or shiny finish. For example, artwork on the rubber component formed in the mold may be formed with a polished surface, such that the artwork on the final component appears glossy, if so desired. The mold cavity may have dimensions slightly larger than desired final dimensions of the rubber component due to shrinkage that may occur during the curing process. For example, depending on the exact formulation of the nitrile rubber material described herein, a shrinkage factor for the material that forms the rubber component may be about 2%, such that a mold cavity may have dimensions about 2% greater than the dimensions of a desired final product.

At block 340, the mold and/or material in the mold may be heated to cure for a cycle time. For example, the mold and/or material may be heated to a temperature of about 100 degrees Celsius for a cycle time of about five minutes. The cycle time may be a length of time after the material is placed into the mold cavity and during which the mold is heated. In some instances, a certain pressure level may be used in addition to elevated temperature. The rubber material may cure during the cycle time.

At optional block 350, a post-curing outgassing operation may be performed. Outgassing may be a process to remove or outgas volatile organic components in the rubber material that may cause odors to develop. The post-curing outgassing operation may include heating the material to a temperature of about 100 degrees Celsius for a time interval of one hour. The elevated temperature may accelerate the outgassing of any volatile organic components to avoid odors coming from the final rubber component.

At block 360, excess rubber may be removed from the rubber component. For example, the rubber component may be removed from the mold cavity and may be inspected for dimensions, quality, and/or other factors. In some instances, extra rubber may be formed on the component. The component may therefore be deflashed or otherwise processed to remove excess or otherwise unwanted rubber. The rubber component may then be ready for coupling to another component and/or device.

At optional block 370, an adhesive may be applied to the rubber component. For example, a pressure sensitive adhesive layer, such as a double-sided tape, or a liquid adhesive may be applied to one or more surfaces of the rubber component. The final rubber component may have a hardness durometer range of between about Shore 40A to about Shore 70A, such as about Shore 60A.

In a particular example of an embodiment, the rubber formulation may be used to form a rubber foot for an electronic device. The rubber foot may therefore be formed of a material that includes acrylonitrile butadiene rubber having a weight percentage of between about 55% to about 60% of the foot. The material may include carbon black having a weight percentage of between about 20% to about 25% of the foot. The material may include oil having a weight percentage of between about 10% to about 15% of the foot, and zinc oxide having a weight percentage of between about 2% to about 3% of the foot. The material may include stearic acid having a weight percentage of between about 0% and about 1% of the foot, and a cross-linking agent having a weight percentage of between about 0% and about 1% of the foot. The material may include an accelerator having a weight percentage of about 1% and about 2% of the foot.

In some embodiments, the rubber material described herein may be used in overmolding processes. For example, the nitrile rubber may be overmolded. However, a challenge may be to ensure that a stiffener material can withstand the higher temperature and pressures of a compression molding process. For metal stiffeners, no change may be required. In the case of a polycarbonate stiffener, the material may be changed to a more heat resistant material. Polyphenylene sulfide may be used as a stiffener material for compatibility with the compression molding process.

Overmolded silicone rubber parts can be formed by compression, rather than liquid injection molding. This reduces both tooling and equipment cost. Additionally, an adhesive can attach to the stiffener rather than the rubber which provides additional cost reduction. Molding time for nitrile rubber material, as described herein, may be relatively longer than silicone rubber due to its higher viscosity.

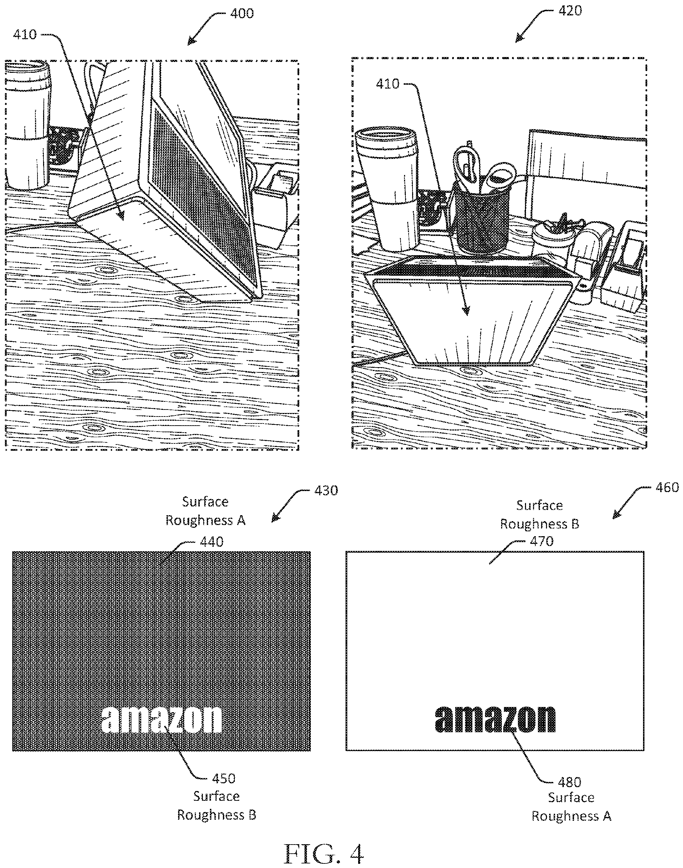

FIG. 4 is a schematic drawing of example use cases of nitrile rubber components having different surface roughnesses in accordance with one or more embodiments of the disclosure.

In FIG. 4, a device 400 may have a rubber foot 410 that forms a base of the device 400. The device 400 may be a voice-activated device, a speaker device, a computer system, or another electronic device. The device 400 may include the rubber foot 410 which may be formed of a nitrile rubber material as described herein. One or more rubber feet may be coupled to a lower surface of the device 400. The rubber foot 410 may have any suitable geometry and/or dimensions. As illustrated in a laid down position 420, the rubber foot 410 may cover most of the lower surface of the device 410.

In a particular example of an embodiment, the rubber formulation described herein may be used to form the rubber foot 410 for the device 400. The rubber foot 410 may therefore be formed of a material that includes acrylonitrile butadiene rubber having a weight percentage of between about 55% to about 60% of the foot. The material may include carbon black having a weight percentage of between about 20% to about 25% of the foot. The material may include oil having a weight percentage of between about 10% to about 15% of the foot, and zinc oxide having a weight percentage of between about 2% to about 3% of the foot. The material may include stearic acid having a weight percentage of between about 0% and about 1% of the foot, and a cross-linking agent having a weight percentage of between about 0% and about 1% of the foot. The material may include an accelerator having a weight percentage of about 1% and about 2% of the foot.

The rubber foot 410 may have a durometer of between about Shore 25A and about Shore 70A, such as Shore 60A. As a result of the formulation of the rubber material, the device 400 may resist a "dancing" effect on a tabletop or other surface when outputting sound at relatively high volume. For example, devices with other types of rubber feet may dance or move laterally and/or vertically when playing back audio at a high volume. Such issues may be avoided by the rubber material described herein, as the rubber foot 410 may be relatively more firm than other rubber materials, and may have a higher coefficient of friction than other rubber materials. The rubber formulation may therefore reduce or mitigate issues such as device movement or dancing.

The rubber foot 410 may have different surface roughnesses. For example, the rubber foot 410 may have a relatively smooth portion with low surface roughness and a relatively rough portion with a high surface roughness. Surface roughness may impact surface friction or an amount of friction between the rubber foot 410 and a surface on which the device 400 is placed. Other factors, such as device weight and rubber foot dimensions may impact the amount of friction. In some embodiments, the relatively smooth portion may be used for artwork, text, or other cosmetic features, such as brand logos, while the rough portion may be used to provide grip and prevent sliding or movement of the device on a surface.

The rubber foot 410 may include a first portion of a surface having a first surface roughness, and a second portion of the surface having a second surface roughness that is greater than the first surface roughness. For example, a first embodiment 430 of the rubber foot may include a first portion 440 having a first surface roughness (e.g., surface roughness A, etc.), and a second portion 450 having a second surface roughness (e.g., surface roughness B, etc.), where the second surface roughness may be less than the first surface roughness. In the illustrated example, the second portion 450 may be relatively smooth compared to the first portion 440. The second portion 450 may appear glossy, and may include text, artwork, logos, or other features that may appear glossy to a user. The first portion 440, in contrast, may appear matte or non-glossy to users. The cosmetic appearance of the features of the second portion 450 may be sharper and/or more defined than similar features formed in other rubber materials as a result of the formulation and processes described herein. In particular, achieving high levels of cosmetic appearance for nitrile rubber may be difficult due to relatively low mold cavity pressure compared to a silicone-based rubber material, and the reduced pressure may increase a difficulty of producing high quality cosmetic features. However, the formulations described herein may achieve high quality cosmetic features even with relatively low mold cavity pressure.

A second embodiment 460 of the rubber foot may include a first portion 470 having a first surface roughness (e.g., surface roughness B, etc.), and a second portion 480 having a second surface roughness (e.g., surface roughness A, etc.), where the second surface roughness may be greater than the first surface roughness (e.g., the opposite of the first embodiment 430). In the illustrated example, the second portion 480 may be relatively rough compared to the first portion 470. The second portion 480 may appear matte or non-glossy, and may include text, artwork, logos, or other features that may appear matte or non-glossy to a user. The first portion 470, in contrast, may appear glossy to users. The cosmetic appearance of the features of the second portion 480 may be sharper and/or more defined than similar features formed in other rubber materials as a result of the formulation and processes described herein.

One or more operations of the methods, process flows, or use cases of FIGS. 1-4 may have been described above as being performed by a user device, or more specifically, by one or more program module(s), applications, or the like executing on a device. It should be appreciated, however, that any of the operations of the methods, process flows, or use cases of FIGS. 1-4 may be performed, at least in part, in a distributed manner by one or more other devices, or more specifically, by one or more program module(s), applications, or the like executing on such devices. In addition, it should be appreciated that processing performed in response to the execution of computer-executable instructions provided as part of an application, program module, or the like may be interchangeably described herein as being performed by the application or the program module itself or by a device on which the application, program module, or the like is executing. While the operations of the methods, process flows, or use cases of FIGS. 1-4 may be described in the context of the illustrative devices, it should be appreciated that such operations may be implemented in connection with numerous other device configurations.

The operations described and depicted in the illustrative methods, process flows, and use cases of FIGS. 1-4 may be carried out or performed in any suitable order, such as the depicted orders, as desired in various example embodiments of the disclosure. Additionally, in certain example embodiments, at least a portion of the operations may be carried out in parallel. Furthermore, in certain example embodiments, less, more, or different operations than those depicted in FIGS. 1-4 may be performed.

Although specific embodiments of the disclosure have been described, one of ordinary skill in the art will recognize that numerous other modifications and alternative embodiments are within the scope of the disclosure. For example, any of the functionality and/or processing capabilities described with respect to a particular device or component may be performed by any other device or component. Further, while various illustrative implementations and architectures have been described in accordance with embodiments of the disclosure, one of ordinary skill in the art will appreciate that numerous other modifications to the illustrative implementations and architectures described herein are also within the scope of this disclosure.

Certain aspects of the disclosure are described above with reference to block and flow diagrams of systems, methods, apparatuses, and/or computer program products according to example embodiments. It will be understood that one or more blocks of the block diagrams and flow diagrams, and combinations of blocks in the block diagrams and the flow diagrams, respectively, may be implemented by the execution of computer-executable program instructions. Likewise, some blocks of the block diagrams and flow diagrams may not necessarily need to be performed in the order presented, or may not necessarily need to be performed at all, according to some embodiments. Further, additional components and/or operations beyond those depicted in blocks of the block and/or flow diagrams may be present in certain embodiments.

Accordingly, blocks of the block diagrams and flow diagrams support combinations of means for performing the specified functions, combinations of elements or steps for performing the specified functions, and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

### ILLUSTRATIVE COMPUTER ARCHITECTURE

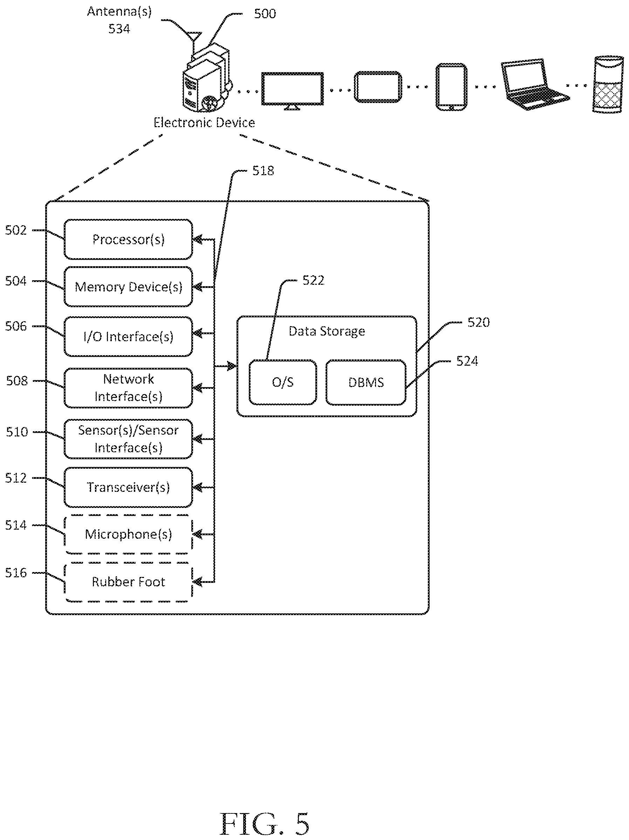

FIG. 5 is a schematic block diagram of one or more illustrative electronic device(s) 500 in accordance with one or more example embodiments of the disclosure. The electronic device(s) 500 may be the electronic device that includes a rubber component as described in any one or more of FIGS. 1-4, and, in other embodiments, may include any suitable computing device including, but not limited to, a server system, a mobile device such as a smartphone, a tablet, an e-reader, a wearable device, or the like; a desktop computer; a laptop computer; a content streaming device; a set-top box; a scanning device; a barcode scanning wand; or the like. The electronic device(s) 500 may correspond to an illustrative device configuration for the electronic device(s) of FIGS. 1-4.

The electronic device(s) 500 may be configured to communicate with one or more servers, user devices, or the like. The electronic device(s) 500 may be any suitable device, such as a mobile device, and may be configured to determine voice commands, determine wakeword utterances, determine and/or control other devices, and other operations. The electronic device(s) 500 may be configured to present content, detect sound, output digital content, and other functionality. In some embodiments, a single remote server or a single group of remote servers may be configured to perform more than one type of functionality in conjunction with an electronic device.

The electronic device(s) 500 may be configured to communicate via one or more networks. Such network(s) may include, but are not limited to, any one or more different types of communications networks such as, for example, cable networks, public networks (e.g., the Internet), private networks (e.g., frame-relay networks), wireless networks, cellular networks, telephone networks (e.g., a public switched telephone network), or any other suitable private or public packet-switched or circuit-switched networks. Further, such network(s) may have any suitable communication range associated therewith and may include, for example, global networks (e.g., the Internet), metropolitan area networks (MANs), wide area networks (WANs), local area networks (LANs), or personal area networks (PANs). In addition, such network(s) may include communication links and associated networking devices (e.g., link-layer switches, routers, etc.) for transmitting network traffic over any suitable type of medium including, but not limited to, coaxial cable, twisted-pair wire (e.g., twisted-pair copper wire), optical fiber, a hybrid fiber-coaxial (HFC) medium, a microwave medium, a radio frequency communication medium, a satellite communication medium, or any combination thereof.

In an illustrative configuration, the electronic device(s) 500 may include one or more processors (processor(s)) 502, one or more memory devices 504 (also referred to herein as memory 504), one or more input/output (I/O) interface(s) 506, one or more network interface(s) 508, one or more sensor(s) or sensor interface(s) 510, one or more transceiver(s) 512, one or more optional microphone(s) 514, one or more optional rubber foot/feet or other rubber component 516, and data storage 520. The electronic device(s) 500 may further include one or more bus(es) 518 that functionally couple various components of the electronic device(s) 500. The electronic device(s) 500 may further include one or more antenna(s) 534 that may include, without limitation, a cellular antenna for transmitting or receiving signals to/from a cellular network infrastructure, an antenna for transmitting or receiving Wi-Fi signals to/from an access point (AP), a Global Navigation Satellite System (GNSS) antenna for receiving GNSS signals from a GNSS satellite, a Bluetooth antenna for transmitting or receiving Bluetooth signals, a Near Field Communication (NFC) antenna for transmitting or receiving NFC signals, NFMI hardware, and so forth. These various components will be described in more detail hereinafter.

The bus(es) 518 may include at least one of a system bus, a memory bus, an address bus, or a message bus, and may permit the exchange of information (e.g., data (including computer-executable code), signaling, etc.) between various components of the electronic device(s) 500. The bus(es) 518 may include, without limitation, a memory bus or a memory controller, a peripheral bus, an accelerated graphics port, and so forth. The bus(es) 518 may be associated with any suitable bus architecture including, without limitation, an Industry Standard Architecture (ISA), a Micro Channel Architecture (MCA), an Enhanced ISA (EISA), a Video Electronics Standards Association (VESA) architecture, an Accelerated Graphics Port (AGP) architecture, a Peripheral Component Interconnect (PCI) architecture, a PCI-Express architecture, a Personal Computer Memory Card International Association (PCMCIA) architecture, a Universal Serial Bus (USB) architecture, and so forth.

The memory 504 of the electronic device(s) 500 may include volatile memory (memory that maintains its state when supplied with power) such as random access memory (RAM) and/or non-volatile memory (memory that maintains its state even when not supplied with power) such as read-only memory (ROM), flash memory, ferroelectric RAM (FRAM), and so forth. Persistent data storage, as that term is used herein, may include non-volatile memory. In certain example embodiments, volatile memory may enable faster read/write access than non-volatile memory. However, in certain other example embodiments, certain types of non-volatile memory (e.g., FRAM) may enable faster read/write access than certain types of volatile memory.

The data storage 520 may include removable storage and/or non-removable storage including, but not limited to, magnetic storage, optical disk storage, and/or tape storage. The data storage 520 may provide non-volatile storage of computer-executable instructions and other data. The memory 504 and the data storage 520, removable and/or non-removable, are examples of computer-readable storage media (CRSM) as that term is used herein.

The data storage 520 may store computer-executable code, instructions, or the like that may be loadable into the memory 504 and executable by the processor(s) 502 to cause the processor(s) 502 to perform or initiate various operations. The data storage 520 may additionally store data that may be copied to the memory 504 for use by the processor(s) 502 during the execution of the computer-executable instructions. Moreover, output data generated as a result of execution of the computer-executable instructions by the processor(s) 502 may be stored initially in the memory 504, and may ultimately be copied to the data storage 520 for non-volatile storage.

More specifically, the data storage 520 may store one or more operating systems (O/S) 522 and one or more database management systems (DBMS) 524. Some or all of these module(s) may be sub-module(s). Any of the components depicted as being stored in the data storage 520 may include any combination of software, firmware, and/or hardware. The software and/or firmware may include computer-executable code, instructions, or the like that may be loaded into the memory 504 for execution by one or more of the processor(s) 502. Any of the components depicted as being stored in the data storage 520 may support functionality described in reference to corresponding components named earlier in this disclosure.

The data storage 520 may further store various types of data utilized by the components of the electronic device(s) 500. Any data stored in the data storage 520 may be loaded into the memory 504 for use by the processor(s) 502 in executing computer-executable code. In addition, any data depicted as being stored in the data storage 520 may potentially be stored in one or more datastore(s) and may be accessed via the DBMS 524 and loaded in the memory 504 for use by the processor(s) 502 in executing computer-executable code. The datastore(s) may include, but are not limited to, databases (e.g., relational, object-oriented, etc.), file systems, flat files, distributed datastores in which data is stored on more than one node of a computer network, peer-to-peer network datastores, or the like. In FIG. 5, an example datastore(s) may include, for example, historical data for peer link quality scores, user profile information, and/or other information.

The processor(s) 502 may be configured to access the memory 504 and execute the computer-executable instructions loaded therein. For example, the processor(s) 502 may be configured to execute the computer-executable instructions of the various program module(s), applications, engines, or the like of the electronic device(s) 500 to cause or facilitate various operations to be performed in accordance with one or more embodiments of the disclosure. The processor(s) 502 may include any suitable processing unit capable of accepting data as input, processing the input data in accordance with stored computer-executable instructions, and generating output data. The processor(s) 502 may include any type of suitable processing unit including, but not limited to, a central processing unit, a microprocessor, a Reduced Instruction Set Computer (RISC) microprocessor, a Complex Instruction Set Computer (CISC) microprocessor, a microcontroller, an Application Specific Integrated Circuit (ASIC), a Field-Programmable Gate Array (FPGA), a System-on-a-Chip (SoC), a digital signal processor (DSP), and so forth. Further, the processor(s) 502 may have any suitable microarchitecture design that includes any number of constituent components such as, for example, registers, multiplexers, arithmetic logic units, cache controllers for controlling read/write operations to cache memory, branch predictors, or the like. The microarchitecture design of the processor(s) 502 may be capable of supporting any of a variety of instruction sets.

Referring now to other illustrative components depicted as being stored in the data storage 520, the O/S 522 may be loaded from the data storage 520 into the memory 504 and may provide an interface between other application software executing on the electronic device(s) 500 and the hardware resources of the electronic device(s) 500. More specifically, the O/S 522 may include a set of computer-executable instructions for managing the hardware resources of the electronic device(s) 500 and for providing common services to other application programs (e.g., managing memory allocation among various application programs). In certain example embodiments, the O/S 522 may control execution of the other program module(s). The O/S 522 may include any operating system now known or which may be developed in the future including, but not limited to, any server operating system, any mainframe operating system, or any other proprietary or non-proprietary operating system.

The DBMS 524 may be loaded into the memory 504 and may support functionality for accessing, retrieving, storing, and/or manipulating data stored in the memory 504 and/or data stored in the data storage 520. The DBMS 524 may use any of a variety of database models (e.g., relational model, object model, etc.) and may support any of a variety of query languages. The DBMS 524 may access data represented in one or more data schemas and stored in any suitable data repository including, but not limited to, databases (e.g., relational, object-oriented, etc.), file systems, flat files, distributed datastores in which data is stored on more than one node of a computer network, peer-to-peer network datastores, or the like. In those example embodiments in which the electronic device(s) 500 is a mobile device, the DBMS 524 may be any suitable lightweight DBMS optimized for performance on a mobile device.

Referring now to other illustrative components of the electronic device(s) 500, the input/output (I/O) interface(s) 506 may facilitate the receipt of input information by the electronic device(s) 500 from one or more I/O devices as well as the output of information from the electronic device(s) 500 to the one or more I/O devices. The I/O devices may include any of a variety of components such as a display or display screen having a touch surface or touchscreen; an audio output device for producing sound, such as a speaker; an audio capture device, such as a microphone; an image and/or video capture device, such as a camera; a haptic unit; and so forth. Any of these components may be integrated into the electronic device(s) 500 or may be separate. The I/O devices may further include, for example, any number of peripheral devices such as data storage devices, printing devices, and so forth.

The I/O interface(s) 506 may also include an interface for an external peripheral device connection such as universal serial bus (USB), FireWire, Thunderbolt, Ethernet port or other connection protocol that may connect to one or more networks. The I/O interface(s) 506 may also include a connection to one or more of the antenna(s) 534 to connect to one or more networks via a wireless local area network (WLAN) (such as Wi-Fi) radio, Bluetooth, ZigBee, and/or a wireless network radio, such as a radio capable of communication with a wireless communication network such as a Long Term Evolution (LTE) network, WiMAX network, 3G network, a ZigBee network, etc.

The electronic device(s) 500 may further include one or more network interface(s) 508 via which the electronic device(s) 500 may communicate with any of a variety of other systems, platforms, networks, devices, and so forth. The network interface(s) 508 may enable communication, for example, with one or more wireless routers, one or more host servers, one or more web servers, and the like via one or more networks.

The antenna(s) 534 may include any suitable type of antenna depending, for example, on the communications protocols used to transmit or receive signals via the antenna(s) 534. Non-limiting examples of suitable antennae may include directional antennae, non-directional antennae, dipole antennae, folded dipole antennae, patch antennae, multiple-input multiple-output (MIMO) antennae, or the like. The antenna(s) 534 may be communicatively coupled to one or more transceivers 512 or radio components to which or from which signals may be transmitted or received.

As previously described, the antenna(s) 534 may include a cellular antenna configured to transmit or receive signals in accordance with established standards and protocols, such as Global System for Mobile Communications (GSM), 3G standards (e.g., Universal Mobile Telecommunications System (UMTS), Wideband Code Division Multiple Access (W-CDMA), CDMA2000, etc.), 4G standards (e.g., Long-Term Evolution (LTE), WiMax, etc.), direct satellite communications, or the like.

The antenna(s) 534 may additionally, or alternatively, include a Wi-Fi antenna configured to transmit or receive signals in accordance with established standards and protocols, such as the IEEE 802.11 family of standards, including via 2.4 GHz channels (e.g., 802.11b, 802.11g, 802.11n), 5 GHz channels (e.g., 802.11n, 802. 11ac), or 50 GHz channels (e.g., 802.1 1ad). In alternative example embodiments, the antenna(s) 534 may be configured to transmit or receive radio frequency signals within any suitable frequency range forming part of the unlicensed portion of the radio spectrum.

The antenna(s) 534 may additionally, or alternatively, include a GNSS antenna configured to receive GNSS signals from three or more GNSS satellites carrying time-position information to triangulate a position therefrom. Such a GNSS antenna may be configured to receive GNSS signals from any current or planned GNSS such as, for example, the Global Positioning System (GPS), the GLONASS System, the Compass Navigation System, the Galileo System, or the Indian Regional Navigational System.

The transceiver(s) 512 may include any suitable radio component(s) for - in cooperation with the antenna(s) 534 - transmitting or receiving radio frequency (RF) signals in the bandwidth and/or channels corresponding to the communications protocols utilized by the electronic device(s) 500 to communicate with other devices. The transceiver(s) 512 may include hardware, software, and/or firmware for modulating, transmitting, or receiving - potentially in cooperation with any of antenna(s) 534 - communications signals according to any of the communications protocols discussed above including, but not limited to, one or more Wi-Fi and/or Wi-Fi direct protocols, as standardized by the IEEE 802.11 standards, one or more non-Wi-Fi protocols, or one or more cellular communications protocols or standards. The transceiver(s) 512 may further include hardware, firmware, or software for receiving GNSS signals. The transceiver(s) 512 may include any known receiver and baseband suitable for communicating via the communications protocols utilized by the electronic device(s) 500. The transceiver(s) 512 may further include a low noise amplifier (LNA), additional signal amplifiers, an analog-to-digital (A/D) converter, one or more buffers, a digital baseband, or the like.

The sensor(s)/sensor interface(s) 510 may include or may be capable of interfacing with any suitable type of sensing device such as, for example, inertial sensors, force sensors, thermal sensors, photocells, and so forth. Example types of inertial sensors may include accelerometers (e.g., MEMS-based accelerometers), gyroscopes, and so forth.

Optional camera(s) may be any device configured to capture ambient light or images. The microphone(s) 514 may be any device configured to receive analog sound input or voice data. The rubber component(s)/rubber feet 516 may be formed of the rubber material described with respect to FIGS. 1-4.

It should be appreciated that the program module(s), applications, computer-executable instructions, code, or the like depicted in FIG. 5 as being stored in the data storage 520 are merely illustrative and not exhaustive and that processing described as being supported by any particular module may alternatively be distributed across multiple module(s) or performed by a different module. In addition, various program module(s), script(s), plug-in(s), Application Programming Interface(s) (API(s)), or any other suitable computer-executable code hosted locally on the electronic device(s) 500, and/or hosted on other computing device(s) accessible via one or more networks, may be provided to support functionality provided by the program module(s), applications, or computer-executable code depicted in FIG. 5 and/or additional or alternate functionality. Further, functionality may be modularized differently such that processing described as being supported collectively by the collection of program module(s) depicted in FIG. 5 may be performed by a fewer or greater number of module(s), or functionality described as being supported by any particular module may be supported, at least in part, by another module. In addition, program module(s) that support the functionality described herein may form part of one or more applications executable across any number of systems or devices in accordance with any suitable computing model such as, for example, a client-server model, a peer-to-peer model, and so forth. In addition, any of the functionality described as being supported by any of the program module(s) depicted in FIG. 5 may be implemented, at least partially, in hardware and/or firmware across any number of devices.

The operations described and depicted in the illustrative methods and process flows of FIGS. 1-4 may be carried out or performed in any suitable order as desired in various example embodiments of the disclosure. Additionally, in certain example embodiments, at least a portion of the operations may be carried out in parallel. Furthermore, in certain example embodiments, less, more, or different operations than those depicted in FIGS. 1-4 may be performed.

Although specific embodiments of the disclosure have been described, one of ordinary skill in the art will recognize that numerous other modifications and alternative embodiments are within the scope of the disclosure. For example, any of the functionality and/or processing capabilities described with respect to a particular device or component may be performed by any other device or component. Further, while various illustrative implementations and architectures have been described in accordance with embodiments of the disclosure, one of ordinary skill in the art will appreciate that numerous other modifications to the illustrative implementations and architectures described herein are also within the scope of this disclosure.

Certain aspects of the disclosure are described above with reference to block and flow diagrams of systems, methods, apparatuses, and/or computer program products according to example embodiments. It will be understood that one or more blocks of the block diagrams and flow diagrams, and combinations of blocks in the block diagrams and the flow diagrams, respectively, may be implemented by execution of computer-executable program instructions. Likewise, some blocks of the block diagrams and flow diagrams may not necessarily need to be performed in the order presented, or may not necessarily need to be performed at all, according to some embodiments. Further, additional components and/or operations beyond those depicted in blocks of the block and/or flow diagrams may be present in certain embodiments.

Accordingly, blocks of the block diagrams and flow diagrams support combinations of means for performing the specified functions, combinations of elements or steps for performing the specified functions, and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Additional types of CRSM that may be present in any of the devices described herein may include, but are not limited to, programmable random access memory (PRAM), SRAM, DRAM, RAM, ROM, electrically erasable programmable read-only memory (EEPROM), flash memory or other memory technology, compact disc read-only memory (CD-ROM), digital versatile disc (DVD) or other optical storage, magnetic cassettes, magnetic tape, magnetic disk storage or other magnetic storage devices, or any other medium which can be used to store the information and which can be accessed. Combinations of any of the above are also included within the scope of CRSM. Alternatively, computer-readable communication media (CRCM) may include computer-readable instructions, program module(s), or other data transmitted within a data signal, such as a carrier wave, or other transmission. However, as used herein, CRSM does not include CRCM.

Although embodiments have been described in language specific to structural features and/or methodological acts, it is to be understood that the disclosure is not necessarily limited to the specific features or acts described. Rather, the specific features and acts are disclosed as illustrative forms of implementing the embodiments. Conditional language, such as, among others, "can," "could," "might," or "may," unless specifically stated otherwise, or otherwise understood within the context as used, is generally intended to convey that certain embodiments could include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

Embodiments of the disclosure can be described in view of one or more of the following:

Embodiment 1 may include a foot for an electronic device, the foot formed of a material comprising: acrylonitrile butadiene rubber having a weight percentage of between about 55% to about 60%; carbon black material having a weight percentage of between about 20% to about 25%; oil having a weight percentage of between about 10% to about 15%; zinc oxide having a weight percentage of between about 2% to about 3%; stearic acid having a weight percentage of up to 1%; a cross-linking agent having a weight percentage of up to 1%; and an accelerator having a weight percentage of about 1% and about 2%.

Embodiment 2 may include Embodiment 1, wherein the foot comprises: a first portion having a first surface roughness; and a second portion having a second surface roughness that is greater than the first surface roughness.

Embodiment 3 may include any one of Embodiments 1 or 2, wherein the material has a durometer of between about Shore 40A and about Shore 70A.

Embodiment 4 may include any one of Embodiments 1 or 3, wherein the cross-linking agent comprises 80% sulfur, and the accelerator is tetramethylthiuram disulfide; and wherein the weight percentage of the carbon black material corresponds to a color of the foot, and the weight percentage of the oil corresponds to a hardness of the rubber foot.

Embodiment 5 may include a material comprising: acrylonitrile butadiene rubber having a weight percentage of between about 50% to about 75%; a solid filler having a weight percentage of between about 10% to about 40%; a liquid filler having a weight percentage of between about 0.5% to about 20%; a first process aid having a weight percentage of between about 1% to about 3%; and a cross-linking agent having a weight percentage of up to 2%.

Embodiment 6 may include Embodiment 5, wherein the solid filler is a carbon black material, and the liquid filler is oil, and wherein the weight percentage of the carbon black material corresponds to a color of the material, and the weight percentage of the oil corresponds to a hardness of the material.

Embodiment 7 may include any one of Embodiments 5 or 6, and comprises an accelerator having a weight percentage of about 0.2% and about 2%.

Embodiment 8 may include any one of Embodiments 5 to 7, wherein the cross-linking agent comprises 80% sulfur, and the accelerator comprises tetramethylthiuram disulfide.

Embodiment 9 may include any one of Embodiments 5 to 8, and includes a first portion having a first surface roughness, and a second portion having a second surface roughness that is greater than the first surface roughness.

Embodiment 10 may include any one of Embodiments 5 to 9, wherein the first portion comprises text or artwork.

Embodiment 11 may include any one of Embodiments 5 to 10, wherein the material has a durometer of between about Shore 25A and about Shore 75A.

Embodiment 12 may include any one of Embodiments 5 to 11, and include a second process aid having a weight percentage of up to 2%.

Embodiment 13 may include any one of Embodiments 5 to 12, wherein the first process aid is zinc oxide, and the second process aid is stearic acid.

Embodiment 14 may include any one of Embodiments 5 to 13, wherein the material has a shrinkage factor of about 2%.

Embodiment 15 may include any one of Embodiments 5 to 14, wherein the material is coupled to a housing of an electronic device.

Embodiment 16 may include a device comprising: a housing; a processor disposed within the housing; a network interface coupled to the processor; a rubber material coupled to the housing, the rubber material comprising: acrylonitrile butadiene rubber having a weight percentage of between about 50% to about 75%; a dark colored solid filler having a weight percentage of between about 10% to about 40%; an oil having a weight percentage of between about 0.5% to about 20%; and a cross-linking agent having a weight percentage of up to 1%.

Embodiment 17 may include Embodiment 16, wherein the rubber material further comprises: a first process aid having a weight percentage of between about 1% to about 3%; and a second process aid having a weight percentage of up to 2%.

Embodiment 18 may include any one of Embodiments 16 to 17, wherein the rubber material has a durometer of about Shore 60A.

Embodiment 19 may include any one of Embodiments 16 to 18, wherein the rubber material further comprises: a first portion having a first surface roughness; and a second portion having a second surface roughness that is greater than the first surface roughness.

Embodiment 20 may include any one of Embodiments 16 to 18, wherein the rubber material further comprises: an accelerator having a weight percentage of about 0.2% and about 2%, and wherein the cross-linking agent comprises 80% sulfur, and the accelerator comprises tetramethylthiuram disulfide.

## Claims

1. A material comprising:
acrylonitrile butadiene rubber having a weight percentage of between 50% to 75%;
a solid filler having a weight percentage of between 10% to 40%;
a liquid filler having a weight percentage of between 0.5% to 20%;
a first process aid having a weight percentage of between 1% to 3%; and
a cross-linking agent having a weight percentage of up to 2%.

2. The material of claim 1, wherein the solid filler is a carbon black material, and the
liquid filler is oil, and wherein the weight percentage of the carbon black material corresponds to a color of the material, and the weight percentage of the oil corresponds to a hardness of the material.

3. The material of any one of claims 1 to 2, further comprising: an accelerator having a weight percentage of 0.2% and 2%.

4. The material of any one of claims 1 to 3, wherein the cross-linking agent comprises 80% sulfur, and the accelerator comprises tetramethylthiuram disulfide.

5. The material of any one of claims 1 to 4, further comprising:
a first portion having a first surface roughness; and
a second portion having a second surface roughness that is greater than the first surface roughness.

6. The material of claim 5, wherein the first portion comprises text or artwork.

7. The material of any one of claims 1 to 6, wherein the material has a durometer of between Shore 25A and Shore 75A.

8. The material of any one of claims 1 to 7, further comprising:
a second process aid having a weight percentage of up to 2%.

9. The material of claim 8, wherein the first process aid is zinc oxide, and the second process aid is stearic acid.

10. The material of any one of claims 1 to 9, wherein the material has a shrinkage factor of 2%.

11. The material of any one of claims 1 to 10, wherein the material is coupled to a housing of an electronic device.

12. A device comprising:
a housing;
a processor disposed within the housing;
a network interface coupled to the processor;
a rubber material coupled to the housing, the rubber material comprising:
acrylonitrile butadiene rubber having a weight percentage of between 50% to 75%;
a solid filler having a weight percentage of between 10% to 40%;
a liquid filler having a weight percentage of between 0.5% to 20%;
a first process aid having a weight percentage of between 1% to 3%; and
a cross-linking agent having a weight percentage of up to 2%.

13. The device of claim 12, wherein the rubber material further comprises:
a second process aid having a weight percentage of up to 2%.

14. The device of any one of claims claim 12 or 13, wherein the rubber material has a durometer of Shore 60A.

15. The device of any one of claims claim 12 to 14, wherein the rubber material further comprises:
a first portion having a first surface roughness;
a second portion having a second surface roughness that is greater than the first surface roughness; and
an accelerator having a weight percentage of 0.2% and 2%, and wherein the cross-linking agent comprises 80% sulfur, and the accelerator comprises tetramethylthiuram disulfide.

## Patentansprüche

1. Material, das Folgendes aufweist:
Acrylnitril-Butadien-Kautschuk mit einem Gewichtsprozentanteil zwischen 50 % und 75 %;
einen festen Füllstoff mit einem Gewichtsprozentanteil zwischen 10 % und 40 %;
einen flüssigen Füllstoff mit einem Gewichtsprozentanteil zwischen 0,5 % und 20 %;
ein erstes Verarbeitungshilfsmittel mit einem Gewichtsprozentanteil zwischen 1 % und 3 %; und
ein Vernetzungsmittel mit einem Gewichtsprozentanteil von bis zu 2 %.

2. Material nach Anspruch 1, wobei der feste Füllstoff ein Rußmaterial ist und der flüssige Füllstoff Öl ist und wobei der Gewichtsprozentanteil des Rußmaterials einer Farbe des Materials entspricht und der Gewichtsprozentanteil des Öls einer Härte des Materials entspricht.

3. Material nach einem der Ansprüche 1 bis 2, das ferner Folgendes aufweist: einen Beschleuniger mit einem Gewichtsprozentanteil von 0,2 % und 2 %.

4. Material nach einem der Ansprüche 1 bis 3, wobei das Vernetzungsmittel 80 % Schwefel aufweist und der Beschleuniger Tetramethylthiuramdisulfid aufweist.

5. Material nach einem der Ansprüche 1 bis 4, das ferner Folgendes aufweist:
einen ersten Bereich mit einer ersten Oberflächenrauheit; und
einen zweiten Bereich mit einer zweiten Oberflächenrauheit, die größer ist als die erste Oberflächenrauheit.

6. Material nach Anspruch 5, wobei der erste Bereich Text oder Bildmaterial aufweist.

7. Material nach einem der Ansprüche 1 bis 6, wobei das Material einen Shore A-Härtegrad zwischen 25 und 75 aufweist.

8. Material nach einem der Ansprüche 1 bis 7, das ferner Folgendes aufweist:
ein zweites Verarbeitungshilfsmittel mit einem Gewichtsprozentanteil von bis zu 2 %.

9. Material nach Anspruch 8, wobei der erste Verarbeitungshilfsstoff Zinkoxid ist und der zweite Verarbeitungshilfsstoff Stearinsäure ist.

10. Material nach einem der Ansprüche 1 bis 9, wobei das Material einen Schrumpfungsfaktor von 2 % aufweist.

11. Material nach einem der Ansprüche 1 bis 10, wobei das Material mit einem Gehäuse eines elektronischen Geräts gekoppelt ist.

12. Vorrichtung, die Folgendes aufweist:
ein Gehäuse;
einen innerhalb des Gehäuses angeordneten Prozessor;
eine mit dem Prozessor verbundene Netzschnittstelle;
ein Gummimaterial, das mit dem Gehäuse gekoppelt ist, wobei das Gummimaterial Folgendes aufweist:
Acrylnitril-Butadien-Kautschuk mit einem Gewichtsanteil zwischen 50 % und 75 %;
einen festen Füllstoff mit einem Gewichtsprozentanteil zwischen 10 % und 40 %;
einen flüssigen Füllstoff mit einem Gewichtsprozentanteil zwischen 0,5 % und 20 %;
ein erstes Verarbeitungshilfsmittel mit einem Gewichtsprozentanteil zwischen 1 % und 3 %; und
ein Vernetzungsmittel mit einem Gewichtsprozentanteil von bis zu 2 %.

13. Vorrichtung nach Anspruch 12, wobei das Gummimaterial ferner Folgendes aufweist:
ein zweites Verarbeitungshilfsmittel mit einem Gewichtsprozentanteil von bis zu 2 %.

14. Vorrichtung nach einem der Ansprüche 12 oder 13, wobei das Gummimaterial einen Shore A-Härtegrad von 60 aufweist.

15. Vorrichtung nach einem der Ansprüche 12 bis 14, wobei das Gummimaterial ferner Folgendes aufweist:
einen ersten Bereich mit einer ersten Oberflächenrauheit;
einen zweiten Bereich mit einer zweiten Oberflächenrauheit, die größer ist als die erste Oberflächenrauheit; und
einen Beschleuniger mit einem Gewichtsprozentanteil von 0,2 % und 2 %, und wobei das Vernetzungsmittel 80 % Schwefel aufweist und der Beschleuniger Tetramethylthiuramdisulfid aufweist.

## Revendications

1. Matériau comprenant :
du caoutchouc acrylonitrile butadiène ayant un pourcentage en poids entre 50 % et 75 %,
une charge solide ayant un pourcentage en poids entre 10 % et 40 % ;
une charge liquide ayant un pourcentage en poids entre 0,5 % et 20 % ;
un premier aide de processus ayant un pourcentage en poids entre 1 % et 3 % ; et
un agent de réticulation ayant un pourcentage en poids de jusqu'à 2 %.

2. Matériau selon la revendication 1, dans lequel la charge solide est un matériau de noir de carbone et la charge liquide est de l'huile, et dans lequel le pourcentage en poids du matériau de noir de carbone correspond à une couleur du matériau, et le pourcentage en poids de l'huile correspond à une dureté du matériau.

3. Matériau selon l'une quelconque des revendications 1 à 2, comprenant en outre :
un accélérateur ayant un pourcentage en poids de 0,2 % et 2 %.

4. Matériau selon l'une quelconque des revendications 1 à 3, dans lequel l'agent de réticulation comprend 80 % de soufre, et l'accélérateur comprend du disulfure de tétraméthylthiurame.

5. Matériau selon l'une quelconque des revendications 1 à 4, comprenant en outre :
une première partie ayant une première rugosité de surface ; et
une seconde partie ayant une seconde rugosité de surface supérieure à la première rugosité de surface.

6. Matériau selon la revendication 5, dans lequel la première partie comprend du texte ou une illustration.

7. Matériau selon l'une quelconque des revendications 1 à 6, le matériau ayant une dureté au duromètre entre Shore 25A et Shore 75A.

8. Matériau selon l'une quelconque des revendications 1 à 7, comprenant en outre :
un second aide de processus ayant un pourcentage en poids de jusqu'à 2 %.

9. Matériau selon la revendication 8, dans lequel le premier aide de processus est l'oxyde de zinc et le second aide de processus est l'acide stéarique.

10. Matériau selon l'une quelconque des revendications 1 à 9, le matériau ayant un facteur de retrait de 2 %.

11. Matériau selon l'une quelconque des revendications 1 à 10, le matériau étant couplé à un boîtier d'un dispositif électronique.

12. Dispositif comprenant :
un boîtier ;
un processeur disposé à l'intérieur du boîtier ;
une interface réseau couplée au processeur ;
un matériau en caoutchouc couplé au boîtier, le matériau en caoutchouc comprenant :
du caoutchouc acrylonitrile butadiène ayant un pourcentage en poids entre 50 % et 75 % ;
une charge solide ayant un pourcentage en poids entre 10 % et 40 %,
une charge liquide ayant un pourcentage en poids entre 0,5 % et 20 %,
un premier aide de processus ayant un pourcentage en poids entre 1 % et 3 % ; et
un agent de réticulation ayant un pourcentage de poids de jusqu'à 2 %.

13. Dispositif selon la revendication 12, dans lequel le matériau en caoutchouc comprend en outre :
un second aide au processus ayant un pourcentage en poids de jusqu'à 2 %.

14. Dispositif selon l'une quelconque des revendications 12 ou 13, dans lequel le matériau de caoutchouc a une dureté au duromètre de Shore 60A.

15. Dispositif selon l'une quelconque des revendications 12 à 14, dans lequel le matériau de caoutchouc comprend en outre :
une première partie ayant une première rugosité de surface ;
une seconde partie ayant une seconde rugosité de surface supérieure à la première rugosité de surface ; et
un accélérateur ayant un pourcentage en poids de 0,2 % et de 2 %, et dans lequel l'agent de réticulation comprend 80 % de soufre, et l'accélérateur comprend du disulfure de tétraméthylthiurame.
